# EUROPEAN PATENT SPECIFICATION

(11) **EP 1 675 759 B1**
(45) Date of publication and mention of the grant of the patent: **04.04.2007**
(21) Application number: 03818622.7
(22) Date of filing: 16.09.2003
(51) Int. Cl.: B60R 22/46

(54) **A WEB SPOOL TIGHTENER**
GURTBANDSPULENSPANNVORRICHTUNG
TENDEUR D'ENROULEUR DE CEINTURE

(43) Date of publication of application: 05.07.2006
(73) Proprietor: Autoliv IFB India PVT Ltd., 700 088 Kolkota (IN)
(72) Inventor: NAG, Bijon Autoliv IFB India Pvt Ltd, 700 107 Kolkota (IN); RANGARAJAN, Sudarsanam Autoliv IFB India Pvt Ltd, 700 088 Kolkota (IN); SHETTY, Vijay Krishnappa Autoliv IFB India Pvt Ltd, Mahadevapura 560 (IN)
(74) Representative: Bardehle, Heinz
(86) International application number: PCT/IB2003/002307
(87) International publication number: WO 2005/025949

(56) References cited:
- DE-A- 4 429 731
- DE-A- 19 614 997

## Description

### Technical Field

The present invention relates to safety belt devices of a vehicle. More specifically, the invention relates to a high ratio rotary web spool tightener with a completely meshed epicyclical gear train mechanism to provide a rotary drive to tighten the web of a seat belt in crash condition.

### Background Art

Automobiles are equipped with seat belt devices. A pretensioning device is installed in a seat belt system to restrain the occupant of a seat in a vehicle in the event of a sudden impact or an accident. The function of a pretensioner is to apply tension to a seat belt for removing slack by rapidly rotating the shaft of the pretensioning device on which the web of the seat belt is wound on sudden and rapid deceleration of a vehicle and thereby restraining the occupant to the seat.

In recent times, the requirement of high ratio pretensioners for seat belt devices is increasing. A typical type of pretensioner has an explosive device (pyrotechnical charge) housed in a gas generator, which is detonated in the event of sudden impact and the resultant drive is used to drive a gear mechanism for rotating a web spool with the gas pressure generated as a result of the explosion.

Another known rotary type pretensioner, wherein balls are used to drive the gear mechanism. The gear mechanism in turn is connected to the spindle of the pretensioner which will rotate as result of the drive generated by the collision of balls on to the gear mechanism on sudden deceleration of a vehicle.

US patent 5,699,976 describes pretensioner with a gear mechanism consisting of a sun gear, a planetary gear, an internal gear, a cam gear and a piston with rack is used to drive the cam gear, which in turn drives the gear system. In this gear mechanism, there is no complete meshing of all the gears in normal state. A set of pins is used to support the planetary gear, which get sheared and thereafter planetary gear engages with the internal gear.

US 5881962 teaches a rotary tightening device for a safety belt with a retractor having a housing and a shaft supported in the housing and a drive wheel connected to the shaft for rotating the shaft. The housing further comprises a channel for mass bodies; such mass bodies when accelerated are used for driving the drive wheel and eventually the shaft to tighten the slack of the seat belt on sudden impact. A collecting container is used to collect the mass bodies that are discharged from the housing.

US 6532739 describe a pretensioner with a plurality of balls housed in a pipe connected to a piston and a gas generator. The balls come into contact with the gear mechanism causing a rotary action on impact. A gas release hole is located in the pipe to discharge the gas. Collision of mass bodies into gear is avoided but again pretensioning stroke is less as spindle will rotate only one rotation.

Further, the known pretensioners generally have a web-pulling capacity in the range of 100-150mm. However, in order to accomplish the task of achieving a web-pulling capacity in the range of 200mm, a compact web spool tightener with a high ratio pretensioning is required.

DE 44 29 731 A discloses a tightener having the features of the preamble of claim 1.

### Objects of the present invention

The primary object of the present invention is to provide a compact web spool tightener of a seat belt with a totally engaged and collision-free gear-train mechanism capable of providing substantial pretensioning of the seat belt upon a rapid deceleration of a vehicle.

An object of the present invention is to provide a high ratio web spool tightener with a web-pulling capacity up to 200 mm.

Another object of the present invention is to provide a web spool tightener with substantially reduced number of mass bodies as driving means that are used to create drive for the gear-train.

Yet another object of the present invention is to provide a web spool tightener with a radially movable piston engaged with the center gear of the gear-train to effect the rotary movement of the gear train on receiving drive from the driving means.

Yet another object of the present invention is to reduce the number of gear devices in said gear train to achieve the high ratio without loss of power.

It is also an object of the present invention to provide a gear ratio system that can be easily modified to enhance the pretensioning performance of the web spool tightener.

Further object of the present invention is to provide a web spool tightener without a need for a reservoir to store the discharged spherical mass bodies.

### Summary of the Invention

The present invention provides a tightener having the features of claim 1.

The present invention provides a high ratio web spool tightener having a continuously engaged epicyclical gear-train with a center gear meshed with an outer gear as a driving member and an inner gear as a driven gear member to rotate the spindle of the retractor through clutch, on application of the drive. Another aspect of the present invention is to provide a pretensioning engine with a totally engaged gear-train mechanism that receives drive from pyrotechnically accelerated reduced number driving means for the pretensioning of webbing. Further aspect of the present invention is to provide a high ratio web spool tightener with a movable piston to provide a rotary drive to the gear-train.

### Brief description of the drawings

- **FIG 1**: depicts an exploded view of web spool tightener with movable piston and epicyclical gear-train and mass bodies as driving means.
- **FIG 2**: provides another exploded view of web spool tightener.
- **FIG 3**: depicts a complete meshing arrangement of the gear-train and the piston in normal state and the state of web before pretensioning stage.
- **FIG 4**: shows a position of the retracted web and position of mass bodies, piston and gear-train after the pretensioning of webbing.
- **FIG 5**: depicts an isometric view of gear train before pretensioning stage.
- **FIG 6**: depicts an isometric view of gear train after pretensioning stage.

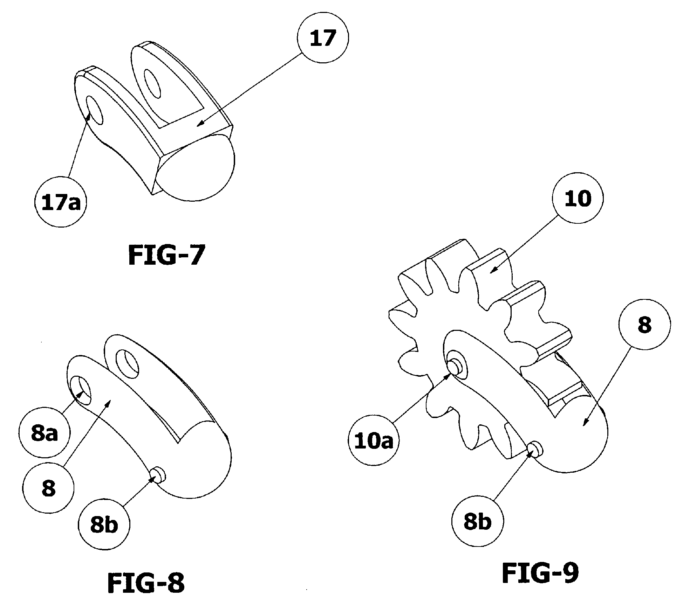

- **FIGs 7, 8 & 9**: show an isometric view of a movable piston with pins and the engagement of the piston with middle gear.

### Detailed description of the invention

Accordingly the present invention provides a pretensioning device, which rotates a spool of a seat belt retractor to pretension, a seat belt, said pretensioning engine comprising;

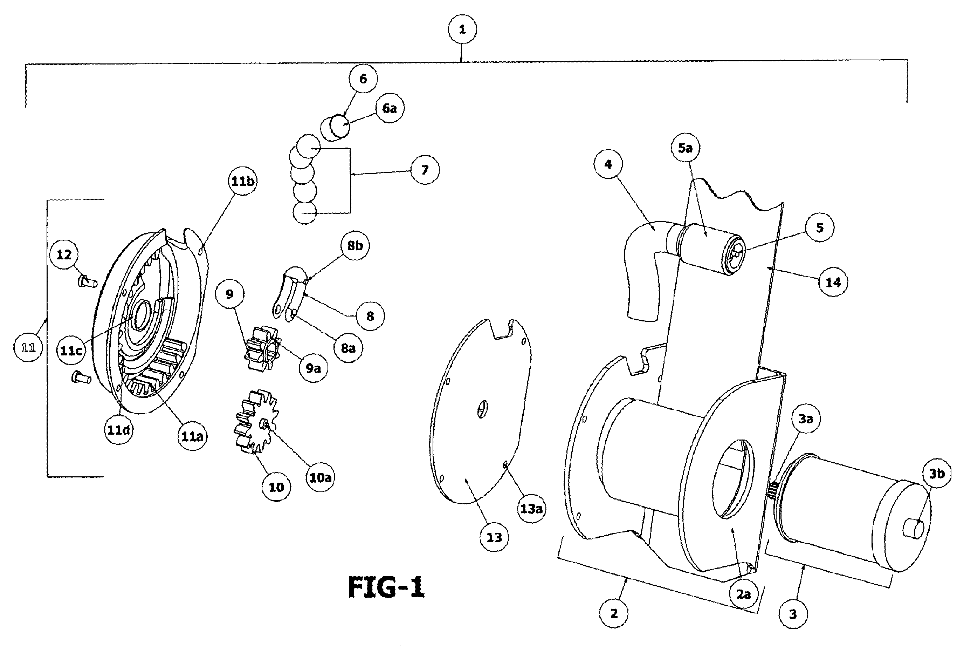

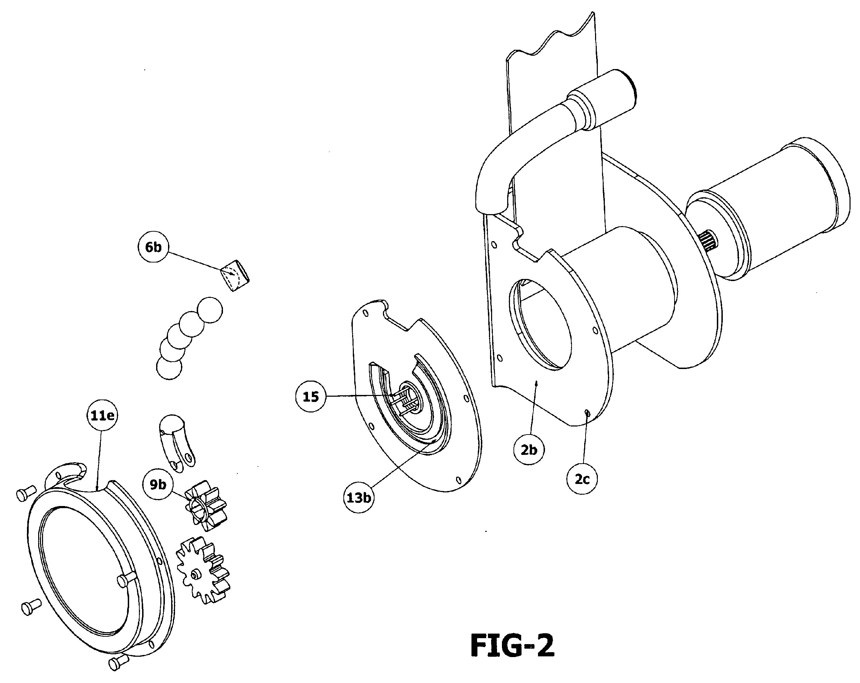

Initially, with reference to Figures 1, 2 & 3, a web spool tightener (1) having housing (2) is mounted in a vehicle, in proximity with a seat, said tightener having a pair of walls (2a & 2b) erected parallel to one another. A spindle (3) that is rotatably mounted between the side walls of the housing (2) which is having a spline end (3a) and other end (3b). A webbing (14) is wound on the spindle (3) to provide extraction and retraction for the seat belt system. The spline end (3a) of the spindle (3) is rotatably meshed with a centre gear (9). A middle gear (10) is meshed with the centre gear (9). A clutch ratchet (9a) disposed in the centre gear (9) and corresponding shear pin (15) disposed in cover (13). A casing (11) with a casing mating face (11b) with an immovable ring gear (11a) is carved out of the casing (11) having protrusions, which continuously engage the middle gear (10). A casing annular spigot (11c) guides the protrusion (9b) of center gear (9) ensures coaxiality between spindle axis and center gear axis. A set of screws (12) used for fixing the casing (11) and cover (13) to the wall of the retractor (2b). A cover hole (13a) is used to fix the cover (13) to frame wall (2b). A guide path (11d) disposed in the casing (11) and another guide path (13b) disposed in cover (13) to guide middle gear (10) and piston (8) for radial motion. Accordingly, a totally meshed gear train system comprising centre, middle and ring gears is formed to provide a non-collision rotary movement to the spindle during the state of sudden deceleration of the vehicle. A shortened conduit (4) housed in the casing (11), having a gas generator (5a) on one end which is also in flow communication with a squib (5) disposed to sense and activate the pyrotechnical charge. The conduit is extended through the opening (11e) of the casing (11) and having an exit at bottom end of the casing (11). A plurality of mass bodies (7), greatly reduced in number, acting as driving means positioned in tandem in the conduit (4) that are accelerated by a pyrotechnical charge. A primary driving means (6) in the form of a cylinder having a flat surface on one side, which is made of high tensile plastic material (6a), disposed to receive the pyrotechnical charge and having a spherical surface on the other side (6b) disposed in proximity with the other spherical mass bodies acting as secondary driving means (7). The last component of the secondary driving means is abutted by a spherical head of a movable piston (8) disposed at the bottom entry of the conduit opening, both during normal and accelerated positions and the other end of the piston having two arm ends (8a) to hold the middle gear (10) by means of a rotatable pin (10a). The movable piston (8) travels with either ends (8a & 8b) guided on the guiding path (11d & 13b) to provide an orbital path and a rapid rotary drive to the gear-train. The orbital path is provided not only to position the gear train on a radially coaxial path but also prevent the derailment of the gear train during rapid acceleration.

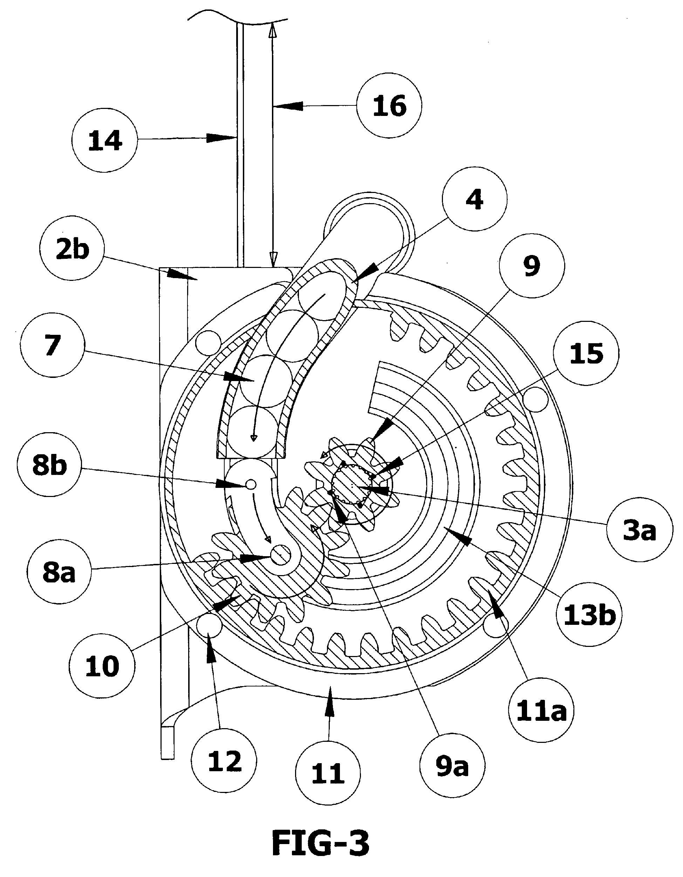

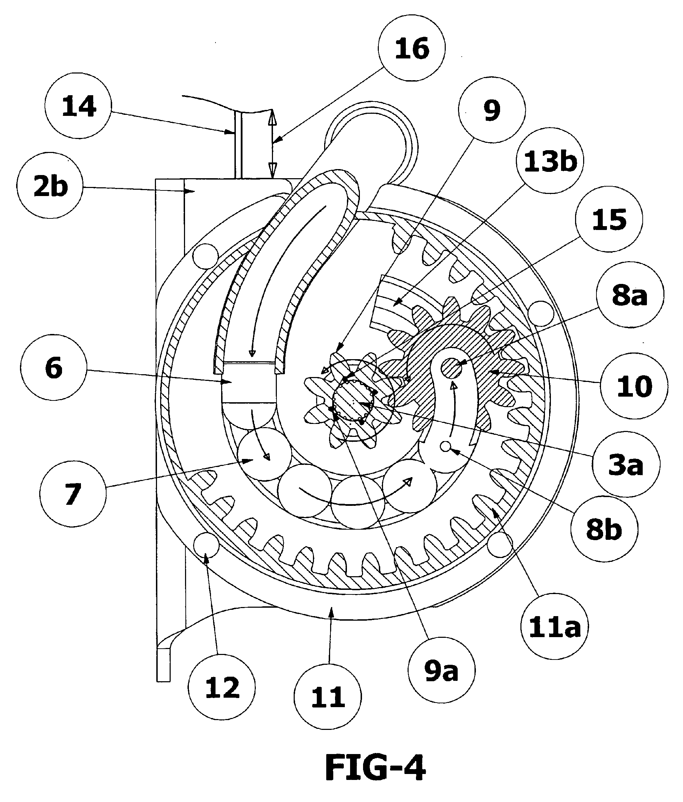

### Functioning of the web spool tightener with specific reference to Fig 3 & 4

A pyrotechnic charge placed at closed chamber i.e. tube is ignited by signal from Electronic Control Unit (ECU) or mechanically sensed high 'g' sensor. The energy of pyrotechnic charge is transferred to the driving means (7) arranged in tandem through the tube (4). The piston (8), which is in flow communication with the driving means, drive the gear-train, which in turn engages the spindle (3) to rotate the rapidly, to retract the web spool. Since, the gear ratio of this gear-train is 1:4, a 140° revolution of the piston (8) rotates the center gear (9) by 2 revolutions, which is sufficient to pull back about 200 mm of webbing (14) as shown in Figures 3 and 4 respectively. The retraction of the webbing (16), as indicated Fig 4 depicts a high ratio pretensioning.

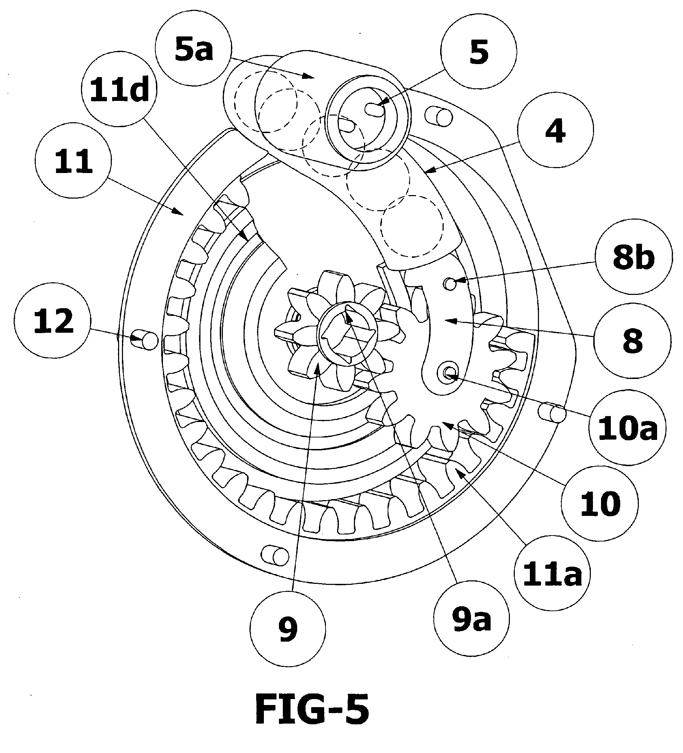

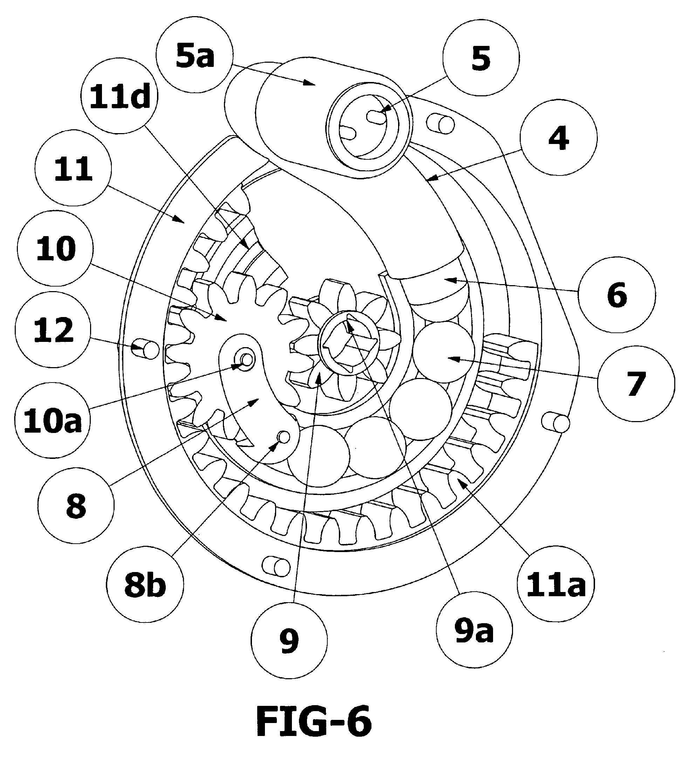

Now by referring to Fig 5 & 6, Fig 5 shows an arrangement of totally meshed gear-train system (9, 10 & 11a) in normal state along with shortened conduit (4) to hold the mass bodies (7). Fig 5 also depicts a guiding path (11d) to provide an orbital path and rotary drive to the gear-train both during normal and accelerated states.

Webbing movement (16) depicts the before pretensioning and after pretensioning as shown in fig 3 & fig 4.

With reference to Fig 6, the flat surface of the primary driving means (6) on receiving the drive from pyrotechnical charge drives the other driving means (7), which in turn drives the movable piston (8). The accelerated piston (8) then traveling on the guiding path (11d & 13b) in an orbital motion provides the gear-train with a rotary drive, which turn rapidly retract the web spool wound on the spindle (unrepresented in this Figure) for a high ratio pretensioning.

Alternatively, different type piston (17) also can be used, which has two ends, one end has two arms (17a) to hold the middle gear (10) and other end spherical to proximity contact with acceleration bodies (7).

Accordingly, the present invention provides a high ratio piston driven web spool tightener, to tighten the web spool of a seat belt for restraining the occupant to the seat, on sudden deceleration of a vehicle, said web spool tightener comprising:
a casing, an immovable ring gear carved out of the inner surface of the casing by protrusions, a middle gear with protrusions is rotatably meshed with the immovable ring gear to provide a rotary drive, a centre gear with a clutch means for engaging the spindle to effect the sudden retraction of the webbing on sudden deceleration and the protrusions on the outer surface of the centre gear are rotatably meshed with the middle gear to receive the drive from the middle gear, said ring, middle and centre gears are meshed together to form a continuously engaged gear-train system not only during normal state of running but also on rapid deceleration of the vehicle, a primary driving means with flat surface on one side to receive the pyrotechnical charge and spherical surface on the side of contact with other driving means, a secondary driving means, substantially reduced in number are housed in a shortened conduit, to provide a rotary drive to the continuously engaged gear train system on pyrotechnical charge, a movable piston with spherical end abutting the secondary driving means in proximity with the conduit's exit and the other end having two arms for holding the middle gear by means of a rotatable pin to provide a non-collision rotary motion to the gear train system, on acceleration of the movable piston by the driving means.

An embodiment of the present invention, wherein the non-collision gear train provides a drive to the spindle of web spool tightener for the pretensioning of webbing on sudden deceleration of a vehicle.

Another embodiment of the present invention, wherein the gear-train system has a non-shearing meshing arrangement.

Further embodiment, wherein the primary driving means disposed is selected from a cylinder having flat surface on one side and a concave surface on the side of engagement with other driving bodies

Another embodiment of the present invention, wherein the primary driving means is made of a high-tensile plastic material.

It is also an embodiment of the present invention, wherein the secondary driving means are selected from rolling mass bodies.

In another embodiment of the present invention, the number of rolling mass bodies is reduced by about 50 per cent.

Further, in another embodiment of the present invention, as a result of reduction in the number of driving means the size of the conduit that houses the rolling mass bodies is also reduced by about half.

It is also an embodiment of the present invention, wherein the movable piston with a pin is used to rotatably guide the piston in the channel to effect a rapid rotary movement to the gear train.

In another embodiment, wherein the channel in the casing of the web spool tightener is provided to guide the movable piston while in motion and to sustain the gear-train orbital position due to rapid radial movement of the piston.

Further, a web spool tightener, wherein no reservoir or collecting chamber is used in the pretensioning engine, since the driving means remain in their positions even after the pretensioning as result of high ratio pretensioning.

In another embodiment, the ratio of pretensioning can be enhanced by suitably altering gear ratio and the number of driving means.

### Advantages

1. The web spool tightener of the present invention has an enhanced webbing pay-in.
2. Gear meshing problem associated with other pretensioning devices is avoided.
3. The web spool tightener of the present invention is a compact and simple rotary unit.
4. The web spool tightener of the present invention has a high ratio pretensioning of the web spool in the range of 200 mm.
5. The web spool tightener of the present invention has no reservoir or collecting chamber, since the driving means remain in their positions even after the pretensioning as result of high ratio pretensioning.

## Claims

1. A high ratio piston driven web spool tightener, to tighten the web spool of a seat belt for restraining the occupant to the seat, on sudden deceleration of a vehicle, said web spool tightener comprising:
a casing (11);
an immovable ring gear (11a) carved out of the inner surface of the casing by protrusions;
a middle gear (10) with protrusions is rotatably meshed with the immovable ring gear to provide a rotary drive;
a centre gean (9) with a clutch means (9a) for engaging the spindle to effect a rapid retraction of the webbing on sudden deceleration and the protrusions on the outer surface of the centre gear are rotatably enmeshed with the middle gear to receive the drive from the middle gear;
said ring, middle and centre gears are meshed together to form a continuously engaged gear-train (9, 10, 11a) system not only during normal state of running but also on rapid deceleration of the vehicle;
and a movable piston (8) with spherical end (8a) and the other and having two arms (8b) for holding the midle gear (10) by means of a rotable pin to provide a non collision rotary motion to the gear train system, on acceleration of the movable piston (8), **characterized in that** the tightener comprises a primary driving means (6) with flat surface (6a) on one side to receive a pyrotechnical charge and spherical surface (6b) on the side of contact with other driving means;
a secondary driving means (7), substantially reduced in number are housed in a shortened conduit, to receive the drive from said primary driving means (6) and to provide a rapid rotary drive to the continuously engaged gear train system on pyrotechnical charge; and **in that** the movable piston (8) or buts with its spherical end the secondary driving means (6) in proximity with the conduit's exit to provide a non-collision rotary motion to the gear train system, on acceleration of the movable piston (8) by both primary (6) and secondary (7) driving means.

2. The web spool tightener of claim 1, wherein the gear-train system (9, 10, 11a) has a non-shearing meshing arrangement.

3. The web spool tightener of claim 1, wherein the primary driving means (6) is selected from a cylinder (6a) having flat surface on one side and a concave surface (6b) on the side of engagement with other secondary driving means (7).

4. The web spool tightener of claim 3, wherein the primary driving means (6) is made of a high-tensile plastic material.

5. The web spool tightener of claim 1, wherein the secondary driving means (7) are selected from rolling mass bodies.

6. The web spool tightener of claim 5, wherein the total number of mass bodies acting as secondary driving means (7) is reduced by about 50 per cent and is in the range of 4-7.

7. The web spool tightener of claim 1, wherein the size of conduit (4) that houses the primary (6) and secondary (7) driving means is proportionately reduced by about half as a result of reduction in the number of secondary driving means.

8. The web spool tightener of claim 1, wherein ratio of pretensioning can be enhanced by suitably altering gear ratio and the number of driving means.

9. The web spool tightener of claim 1, wherein the high ratio pretensioning of the web spool is up to 200mm.

10. The web spool tightener of claim 1, wherein the non-collision gear-train (9, 10, 11a) provides a drive to the spindle of web spool tightener for the pretensioning of webbing on sudden deceleration of a vehicle.

11. The web spool tightener of claim 1, wherein the movable piston (8) with a pin is used to rotatably guide the piston in the channel to effect a rapid rotary movement to the gear train (9, 10, 11a).

12. The web spool tightener of claim 1, wherein the channel (11d) in the casing is provided to guide the movable piston (8) while in motion and to sustain the gear-train (9, 10, 11a) orbital position due to rapid radial movement of the piston.

## Patentansprüche

1. Zylinderangetriebene Bahnspulenspannvorrichtung mit hohem Verhältnis zum Spannen der Bahnspule eines Sitzgurtes zum Zurückhalten des Insassen auf dem Sitz auf eine plötzliche Geschwindigkeitsabnahme eines Fahrzeugs hin, wobei die Bahnspulenspannvorrichtung aufweist:
ein Gehäuse (11);
ein unbewegliches Hohlzahnrad (11a), das von der inneren Oberfläche des Gehäuses durch Vorsprünge herausgearbeitet ist;
ein mittleres Zahnrad (10) mit Vorsprüngen ist drehend mit dem unbeweglichen Hohlzahnrad in Eingriff zum Bereitstellen eines drehenden Antriebs;
ein Zentrumszahnrad (9) mit einem Kupplungsmittel (9a) zum In-Eingriff-Bringen der Spindel, um ein schnelles Zurückziehen der Bahn auf eine plötzliche Geschwindigkeitsabnahme hin zu bewirken, und die Vorsprünge auf der äußeren Oberfläche des Zentrumszahnrads sind drehend mit dem mittleren Zahnrad in Eingriff, um den Antrieb von dem mittleren Zahnrad zu empfangen;
das Hohlzahnrad, das mittlere Zahnrad und das Zentrumszahnrad stehen zusammen in Eingriff, um ein kontinuierlich in Eingriff stehendes Getriebezug-(9, 10, 11a)-System nicht nur während dem normalen Zustand eines Fahrens, sondern auch auf eine schnelle Geschwindigkeitsabnahme des Fahrzeugs hin zu bilden;
und einen beweglichen Kolben (8), der das mittlere Zahnrad (10) hält, um dem Getriebesystem auf eine Beschleunigung des beweglichen Kolbens (8) hin eine nicht-kollineare Drehbewegung bereitzustellen,
**dadurch gekennzeichnet, dass** die Spannvorrichtung aufweist
ein primäres Antriebsmittel (6) mit einer flachen Oberfläche (6a) auf einer Seite, um eine pyrotechnische Ladung aufzunehmen, und einer kugelförmigen Oberfläche (6b) auf der Seite des Kontakts mit anderen Antriebsmitteln;
ein sekundäres Antriebsmittel (7), das deutlich in der Anzahl reduziert ist, ist in einer abgekürzten Leitung aufgenommen, um den Antrieb von dem primären Antriebsmittel (6) zu empfangen und einen schnellen drehenden Antrieb für das kontinuierlich in Eingriff stehende Getriebezugsystem auf die pyrotechnische Ladung hin bereitzustellen; und dass ein beweglicher Kolben (8) mit kugelförmigem Ende (8a) an das sekundäre Antriebsmittel (6) in der Nähe von dem Ausgang der Leitung anstößt und das andere Ende (8b) zwei Arme aufweist zum Halten des mittleren Zahnrads (10) mittels eines drehbaren Stiftes, um dem Getriebezugsystem (16) die nicht-kollineare Drehbewegung auf die Beschleunigung des beweglichen Kolbens (8) hin durch sowohl das primäre (6) als auch das sekundäre Antriebsmittel (7) bereitzustellen.

2. Bahnspulenspannvorrichtung nach Anspruch 1, wobei das Getriebezugsystem (9, 10, 11a) eine nicht-scherende Eingriffsanordnung aufweist.

3. Bahnspulenspannvorrichtung nach Anspruch 1, wobei das primäre Antriebsmittel (6) ausgewählt ist aus einem Zylinder (6a), welcher eine flache Oberfläche auf einer Seite und eine konkave Oberfläche (6b) auf der Seite des Eingriffs mit dem anderen sekundären Antriebsmittel (4) aufweist.

4. Bahnspulenspannvorrichtung nach Anspruch 3, wobei das primäre Antriebsmittel (6) aus einem hoch-dehnbaren Kunststoffmaterial hergestellt ist.

5. Bahnspulenspannvorrichtung nach Anspruch 1, wobei das sekundäre Antriebsmittel (7) aus rollenden Gewichtskörpem ausgewählt ist.

6. Bahnspulenspannvorrichtung nach Anspruch 5, wobei die Gesamtanzahl von Gewichtskörpem, welche als sekundäres Antriebsmittel (7) wirken, um in etwa 50 Prozent reduziert ist und in dem Bereich von 4-7 ist.

7. Bahnspulenspannvorrichtung nach Anspruch 1, wobei die Größe der Leitung (4), welche das primäre (6) und das sekundäre (7) Antriebsmittel aufnimmt, proportional um in etwa die Hälfte reduziert ist als ein Ergebnis der Reduzierung der Anzahl des zweiten Antriebsmittels.

8. Bahnspulenspannvorrichtung nach Anspruch 1, wobei das Verhältnis der Vorspannung verbessert werden kann durch geeignetes Ändern des Getriebeverhältnisses und der Anzahl von Antriebsmitteln.

9. Bahnspulenspannvorrichtung nach Anspruch 1, wobei die Vorspannung der Bahnspule in hohem Verhältnis bis zu 200 mm beträgt.

10. Bahnspulenspannvorrichtung nach Anspruch 1, wobei der Nicht-Kollisions-Getriebezug (9, 10, 11a) einen Antrieb für die Spindel der Bahnspulenspannvorrichtung für die Vorspannung der Bahn auf eine plötzliche Geschwindigkeitsverzögerung eines Fahrzeugs hin bereitstellt.

11. Bahnspulenspannvorrichtung nach Anspruch 1, wobei der bewegliche Kolben (8) mit einem Stift verwendet wird, um den Kolben drehbar in dem Kanal zu führen, um eine schnelle drehende Bewegung des Getriebezugs (9, 10, 11a) zu bewirken.

12. Bahnspulenspannvorrichtung nach Anspruch 1, wobei der Kanal (11d) in dem Gehäuse bereitgestellt ist, um den beweglichen Kolben (8) zu führen, während er in Bewegung ist, und um die räumliche Position des Getriebezugs (9, 10, 11a) aufgrund einer schnellen radialen Bewegung des Kolbens zu tragen bzw. zu stützen.

## Revendications

1. Tendeur d'enrouleur de ceinture entraîné par un piston à rapport élevé, pour tendre l'enrouleur de ceinture d'une ceinture de sécurité afin de retenir l'occupant sur le siège suite à un ralentissement soudain d'un véhicule, ledit tendeur d'enrouleur de ceinture comprenant :
un boîtier (11) ;
une couronne dentée immobile (11a) découpée dans la surface interne du boîtier par saillies ;
un engrenage intermédiaire (10) avec des saillies est engrené de manière rotative avec la couronne dentée immobile pour assurer un entraînement rotatif ;
un engrenage central (9) avec des moyens d'embrayage (9a) pour mettre en prise l'axe afin d'effectuer une rétraction rapide de la ceinture suite au ralentissement soudain et les saillies sur la surface externe de l'engrenage central sont engrenées de manière rotative avec l'engrenage intermédiaire pour recevoir l'entraînement de l'engrenage intermédiaire ;
ladite couronne dentée, lesdits engrenages intermédiaire et central sont engrenés ensemble pour former un système de train d'engrenages (9, 10, 11a) mis en prise de manière continue non seulement pendant l'état normal de fonctionnement mais également au ralentissement rapide du véhicule ;
et un piston mobile (8) supportant l'engrenage intermédiaire (10) pour imprimer un mouvement rotatif non colinéaire au système d'engrenage suite à l'accélération du piston mobile (8),
**caractérisé en ce que** le tendeur comprend :
des moyens d'entraînement primaires (6) avec une surface plate (6a) sur un côté pour recevoir une charge pyrotechnique et une surface sphérique (6b) sur le côté du contact avec d'autres moyens d'entraînement ;
des moyens d'entraînement secondaires (7), sensiblement réduits en nombre, sont logés dans un conduit raccourci, pour recevoir l'entraînement des moyens d'entraînement primaires (6) et pour assurer un entraînement rotatif rapide au système de train d'engrenages mis en prise de manière continue à la charge pyrotechnique ; et **en ce qu'**un piston mobile (8) avec extrémité sphérique (8a) vient en butée contre les moyens d'entraînement secondaires (6) à proximité de la sortie du conduit et l'autre extrémité (8b) ayant deux bras pour maintenir l'engrenage intermédiaire (10) au moyen d'une broche rotative pour imprimer le mouvement rotatif non colinéaire au système de train d'engrenages (16) à l'accélération du piston mobile (8) à la fois par les moyens d'entraînement primaires (6) et secondaires (7).

2. Tendeur d'enrouleur de ceinture selon la revendication 1, dans lequel le système de train d'engrenages (9, 10, 11a) a un agencement d'engrènement sans cisaillement.

3. Tendeur d'enrouleur de ceinture selon la revendication 1, dans lequel les moyens d'entraînement primaires (6) sont choisis à partir d'un cylindre (60) ayant une surface plate sur un côté et une surface concave (6b) sur le côté de la mise en prise avec les autres moyens d'entraînement secondaires (7).

4. Tendeur d'enrouleur de ceinture selon la revendication 3, dans lequel les moyens d'entraînement primaires (6) sont réalisés à partir d'une matière plastique à haute résistance à la traction.

5. Tendeur d'enrouleur de ceinture selon la revendication 1, dans lequel les moyens d'entraînement secondaires (7) sont choisis parmi des corps massifs roulants.

6. Tendeur d'enrouleur de ceinture selon la revendication 5, dans lequel le nombre total de corps de masse agissant en tant que moyens d'entraînement secondaires (7) est réduit d'environ 50 pour cent et est de l'ordre de 4 à 7.

7. Tendeur d'enrouleur de ceinture selon la revendication 6, dans lequel la taille du conduit (4) qui loge les moyens d'entraînement primaires (6) et secondaires (7) est proportionnellement réduite d'environ la moitié suite à la réduction du nombre des moyens d'entraînement secondaires.

8. Tendeur d'enrouleur de ceinture selon la revendication 1, dans lequel le rapport de pré-tension peut être amélioré en modifiant de manière appropriée le rapport d'engrenage et le nombre de moyens d'entraînement.

9. Tendeur d'enrouleur de ceinture selon la revendication 1, dans lequel la pré-tension à rapport élevé de l'enrouleur de ceinture va jusqu'à 200 mm.

10. Tendeur d'enrouleur de ceinture selon la revendication 1, dans lequel le train d'engrenages sans collision (9, 10, 11a) assure l'entraînement de l'axe du tendeur d'enrouleur de ceinture pour la pré-tension de la ceinture au ralentissement soudain d'un véhicule.

11. Tendeur d'enrouleur de ceinture selon la revendication 1, dans lequel le piston mobile (8) avec une broche est utilisé pour guider de manière rotative le piston dans le canal afin de faire effectuer un mouvement rotatif rapide au train d'engrenages (9, 10, 11a).

12. Tendeur d'enrouleur de ceinture selon la revendication 1, dans lequel le canal (11d) dans le boîtier est prévu pour guider le piston mobile (8) alors qu'il est en mouvement et pour maintenir la position orbitale du train d'engrenages (9, 10, 11a) en raison du mouvement radial rapide du piston.
